# EUROPEAN PATENT APPLICATION

(11) **EP 4 030 107 A1**
(43) Date of publication of application: **20.07.2022**
(21) Application number: 22150382.4
(22) Date of filing: 05.01.2022
(51) Int. Cl.: F24C 15/32, B64D 11/04

(54) **AN AIRCRAFT OVEN WITH A MAGNETICALLY COUPLED FAN**

(30) Priority: 13.01.2021 US 202117148497
(71) Applicant: Koninklijke Fabriek Inventum B.V., 3439 MG Nieuwegein (NL)
(72) Inventor: HUIJSING, Hans, 3404 KD IJsselstein (NL)
(74) Representative: Dehns

(57) **Abstract**

An appliance for use in an aircraft galley including a body (102) defining an interior space (104), a motor (106) configured to drive a fan propeller (108) situated on an outside of the body (102), and a fan propeller (108) situated within the interior space (104), wherein a shaft (110) of a fan propeller is not in direct contact with a shaft (112) of the motor.

## Description

### Background

### Technological Field

The present disclosure relates generally to an aircraft oven, and more specifically to an oven employing a magnetically coupled fan.

### Description of Related Art

Aircraft ovens typically coupled a fan and motor for operating the fan through a mechanical shaft coupling. However, this exposes the motor to extremely high heats and steam and degrades the seals, couplings, and motor itself. Although, conventional components and methods have generally been considered satisfactory for their intended purpose, there is still a need in the art for improved fan coupling for aircraft ovens. The present disclosure provides a solution for this need.

### Summary of the Invention

An appliance for use in an aircraft galley is disclosed. The appliance, an oven includes, a body defining an interior space, a motor configured to drive a fan propeller situated on an outside of the body, and a fan propeller situated within the interior space, wherein a shaft of a fan propeller is not in direct contact with a shaft of the motor. The shaft of the fan propeller can be joined to a first magnet array. The shaft of the motor can be joined to a second magnet array. The motor shaft and the fan shaft can be coupled by a magnetic coupling. The motor shaft and the fan shaft can be mechanically un-coupled during operation and be coupled only using a magnetic coupling.

The motor and the fan propeller can be separated by a wall. The shaft of the motor and the shaft of the propeller can form a single axis. A barrier can separate the shaft motor and the shaft propeller. The motor shaft can be entirely outside of the interior space. The motor can be driven by aircraft power. The appliance can be a sealed oven.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject disclosure appertains will readily understand how to make and use the devices and methods of the subject disclosure without undue experimentation, embodiments thereof will be described in detail herein below with reference to certain figures, wherein:

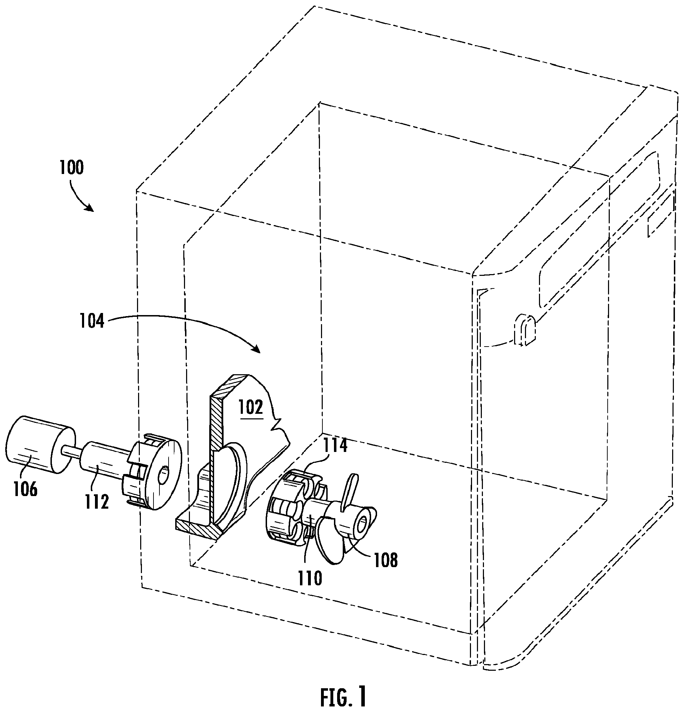

FIG. 1 is a side view of an exemplary embodiment of an appliance, showing a fan motor and propeller.

### Detailed Description

Reference will now be made to the drawings wherein like reference numerals identify similar structural features or aspects of the subject disclosure. For purposes of explanation and illustration, and not limitation, a partial view of an exemplary embodiment of an aircraft appliance in accordance with the disclosure is shown in FIG. 1 and is designated generally by reference character 100. The coupling of the motor shaft and fan propeller described herein can be used to improve the reliability and useful life of aircraft ovens.

Referring now to FIG. 1, an oven 100 within and an aircraft galley and powered by aircraft power includes an outer shell or body 102 defining an interior space 104 where food is prepared and warmed. A motor 106 configured to drive a fan propeller 108 is situated outside of the body 102. The fan propeller 108, situated within the interior space, includes a shaft 110 that is not in direct contact with a shaft of the motor 112. The fan propeller 108 is joined by the fan shaft 110 to a first magnet array 114 and the shaft of the motor 112 is joined to a second magnet array 116 resulting in the motor shaft 112 and the fan shaft 110 being by a magnetic coupling and not mechanically coupled. The motor 106 and the fan propeller 108 are separated a wall 102, which defines the interior creating a sealed oven interior. The wall 102, which does not include any conduits, holes, or perforations, improves the efficiency of the oven since hot air is better trapped within the oven and requires less energy to heat, This fan-propeller arrangement removes the need for a mechanically coupled shaft coupling, which required using seals, which have a tendency to degrade and have to be serviced and replaced. It also removes the need for using lubricating materials which can also degrade and cause noxious smells and odors to be present within the oven if they degrade due to heat. Finally, this arrangement allows the ovens to be operated at higher heats and for longer periods of time than conventional ovens because there is no risk of seal degradation.

The methods and systems of the present disclosure, as described above and shown in the drawings, provide for an aircraft appliance that is more reliable and longer operating times. While the apparatus and methods of the subject disclosure have been shown and described with reference to preferred embodiments, those skilled in the art will readily appreciate that changes and/or modifications may be made thereto without departing from the scope of the subject disclosure.

## Claims

1. An appliance for use in an aircraft galley comprising:
a body (102) defining an interior space (104);
a motor (106) configured to drive a fan propeller (108) situated on an outside of the body (102); and
a fan propeller (108) situated within the interior space (104), wherein a shaft (110) of the fan propeller is not in direct contact with a shaft (112) of the motor.

2. The appliance of claim 1, wherein the shaft (110) of the fan propeller is joined to a first magnet array (114).

3. The appliance of claim 1 or 2, wherein the shaft (112) of the motor is joined to a second magnet array (116).

4. The appliance of any preceding claim, wherein the motor shaft (112) and the fan shaft (110) are coupled by a magnetic coupling.

5. The appliance of any preceding claim, wherein the motor shaft (112) and the fan shaft (110) are not mechanically coupled.

6. The appliance of any preceding claim, wherein the motor (106) and the fan propeller (108) are separated by at least one wall (102).

7. The appliance of any preceding claim, wherein the shaft (112) of the motor and the shaft (110) of the propeller form a single axis.

8. The appliance of claim 5, wherein a barrier separates the shaft motor and the shaft propeller.

9. The appliance of any preceding claim, wherein the motor shaft (112) is entirely outside of the interior space (104).

10. The appliance of any preceding claim, wherein the motor (106) is driven by aircraft power.

11. The appliance of any preceding claim, wherein the appliance is part of an aircraft galley.

12. The appliance of any preceding claim, wherein the appliance is a sealed oven.

13. The appliance of any preceding claim, wherein the fan shaft (110) is exposed to a higher heat coefficient than the motor shaft (112).

14. The appliance of any preceding claim, wherein the motor shaft (112) does not include a seal between the motor shaft and an aperture in the cavity through which the shaft is protruding into the cavity.
